# EUROPÄISCHE PATENTSCHRIFT

(11) **EP 1 719 987 B1**
(45) Veröffentlichungstag und Bekanntmachung des Hinweises auf die Patenterteilung: **26.11.2008**
(21) Anmeldenummer: 06113304.7
(22) Anmeldetag: 28.04.2006
(51) Int. Cl.: G01G 19/04

(54) **Kraftmessplatte**
Load measuring plate
Plaque de mesure de charge

(30) Priorität: 02.05.2005 DE 102005020770
(43) Veröffentlichungstag der Anmeldung: 08.11.2006
(73) Patentinhaber: Pieper, Siegfried, 67549 Worms (DE)
(72) Erfinder: Pieper, Siegfried, 67549 Worms (DE)
(74) Vertreter: Thews, Gustav

(56) Entgegenhaltungen:
- DE-A1- 10 303 706
- DE-U1- 20 112 238
- US-A- 3 366 189

## Beschreibung

Die Erfindung bezieht sich auf eine Vorrichtung zum Anbringen unterhalb einer auf mindestens einem Schienenlager angeordneten Schiene mit einem Schienenfuß zwecks Erfassung einer Schienenlast mit mindestens einem Sensor, der unterhalb des Schienenfußes bzw. zwischen dem Schienenfuß der Schiene und dem jeweiligen Schienenlager für die Schiene anbringbar ist. Der Begriff Schiene umfasst dabei alle T-trägerförmigen Lastschienen mit einem Schienenfuß, die zur Aufnahme von bewegten Lasten wie Züge oder Fördersysteme oder statische Lasten wie Stützlasten von Maschinen oder Gebäuden dienen. Als Schienenlager ist neben dem unmittelbaren Aufliegelager bzw. Aufliegepunkt der Schiene, wie z. B. eine Schwelle, auch ein mittelbares Aufliegelager, wie z. B. ein Gleisbett, aus Beton oder aus Schotter zu verstehen. Zumindest der unterhalb der Schiene angeordnete Sensor stützt sich somit auf der Schwelle oder auf dem Gleisbett ab. Unterlegteile bzw. Futterteile zwischen dem Sensor und der Schiene bzw. dem so gebildeten Schienenlager sind ebenfalls vorgesehen.

Aus der DE 102 41 320 A1 ist eine Messplatte bekannt, die auf der Unterseite eine Ausnehmung aufweist, in der ein die Verformung der Messplatte aufnehmender Dehnmessstreifen vorgesehen ist. Durch die Anordnung des Dehnmessstreifens an der Messplatte ist ein Kraftnebenschluss zwischen dem Schienenfuß und dem Dehnmessstreifen gegeben, der die Messung nachteilig beeinflusst.

Aus der WO 00/73118 A1 ist bereits eine Schienenunterlagsplatte mit Kraftsensoren zum Auflegen eines Schienenfußes bekannt. Die Schienenunterlagsplatte ist dabei als einen Kraftsensor bildender, piezoelektrischer Wandler ausgeführt, der aus mehreren Elastomerschichten aufgebaut ist. Der so gebildete Kraftsensor dient dabei als Auflager für den Schienenfuß und nimmt die gesamte Last des Schienenfußes auf. Dabei ist es zwar vorgesehen, dass der Kraftsensor in das Elastomer eingebettet ist, wobei das Elastomer teilweise als Kraftbypass ausgebildet ist, jedoch ist in jedem Fall das Auflager für den Schienenfuß aus dem Elastomer gebildet.

Die DE 29 24 190 A1 beschreibt die Verwendung eines an der Fahrschiene angeordneten piezoelektrischen Kraftsensors, der durch die auf den Schienen geführten Eisenbahnfahrzeuge betätigbar ist, d. h. der Kraftsensor nimmt die Last der Fahrschiene bis zu einer Größe von 100 KN auf. Hierzu weist das Schienenlager eine nach oben offene Ausnehmung auf, in die der Sensor eingesetzt ist, wobei die Fahrschiene auf dem Sensor aufliegt. Eine erfindungsgemäße Vorrichtung zum Einsetzen zwischen den Schienenfuß und das Schienenlager ist nicht beschrieben. Sobald das Rad den hier dargestellten Messpunkt oberhalb des Sensors verlässt, sich also in das Schwellenfach bewegt, kippt der Schienenfuß über die vordere, dem Rad zugewandte Kante des Schienenlagers, so dass der Sensor nicht mehr belastet wird. Die sich daraus ergebende Messung ist also diskontinuierlich. Neben der aufwendigen Anpassung bzw. Ausbildung des Schienenlagers mit einer Nut ist es nachteilig, dass es sich um einen Kraftsensor handelt, der bis zu 100 KN Last aufnimmt. Diese Lastaufnahme führt zu einem erhöhten Verschleiß, der einen langlebigen und wirtschaftlichen Einsatz nicht gewährleistet.

Die DE 201 12 238 U1 beschreibt eine Messvorrichtung zum Anbringen unterhalb einer Schiene zwecks Erfassung einer Schienenlast, wobei die Schiene einen Schienenfuß aufweist, der über mindestens ein der Befestigung der Schiene dienendes Schienenlager auf einer Schwelle lagerbar ist. Die Vorrichtung dient unter anderem der Erfassung einer durch eine Radlast generierten Durchbiegung des Schienenfußes. Hierzu sind Laserempfänger über Befestigungswinkel mittels Schrauben am Schienenfuß angeordnet, die mit Lasersensoren zusammenwirken. Die Lasersensoren befinden sich dabei unterhalb des Schienenfußes. Die Durchbiegung wird durch zwei empfängerseitig vorgesehene Auflageteile gebildet, wobei die Auflageteile eine durch die Biegebewegung des Schienenfußes generierte Verkippung ausführen.

Der Erfindung liegt die Aufgabe zugrunde, eine Vorrichtung zum präzisen und kontinuierlichen Erfassen der Last eines Schienenfußes bereitzustellen, die **eine einfache Handhabung und damit** einen wirtschaftlichen Einsatz gewährleistet.

Gelöst wird die Aufgabe erfindungsgemäß durch die Merkmale des Hauptanspruchs. Hierdurch wird erreicht, dass eine proportional zur Belastung entstehende Verformung bzw. Durchbiegung des Schienenfußes mit Bezug zu einer Richtung quer zur Schiene oder mit Bezug zur Längsachse der Schiene in der Art eines Biegebalkens generierbar und ermittelbar ist. Da es sich um einen Wegsensor handelt, ist die vom Sensor aufzunehmende Betätigungskraft von etwa 300 N bis 500 N relativ gering. Der Einfluss auf das Biegeverhalten des Schienenfußes ist vernachlässigbar.

Insbesondere beim Einsatz eines aus Sender, Empfänger und ggf. Reflektor bestehenden Verformungsaufnehmers wie beispielsweise einem Triangulationssensor, der eine Änderung des Verlaufs eines Lichtstrahls erfasst, kann zumindest einer der vorgenannten Teile am Schienenfuß angeordnet sein, wobei der andere Teil, sofern nicht auch am Schienenfuß vorgesehen, eben am Schienenlager vorgesehen ist.

Dabei ist es vorteilhaft, dass der Wegsensor einen Messbereich von +/- 2 mm, insbesondere +/- 0,5 mm, aufweist. Bei einem Abstand a der Auflageteile von etwa 100 mm ist mit einer Durchbiegung des Schienenfußes von etwa +/- 0,5 mm zu rechnen. Je nach Abstand a ist ein entsprechender Messbereich vorzusehen, um die Verformung des Schienenfußes zu erfassen.

Vorteilhaft ist es auch, dass der Sensor und/oder die Auflageteile eine punktförmige Anlage aufweisen, gegen die der Schienenfuß aufliegt. Somit ist eine kontinuierliche Messung der Schienenlast möglich, weil der Schienenfuß unabhängig von seiner Verformung aufgrund der Last immer auf den punktförmigen Anlagen aufliegt und nicht über das Schienenlager aufkippen kann. Die Auflageteile sind dabei sehr steif, vorzugsweise aus legiertem Stahl ausgebildet, so dass deren elastische Verformung und die damit aufgenommene Energie einen vernachlässigbaren Wert **annehmen.** Die Auflageteile sind dabei vorzugsweise halbkugelförmig oder pyramidenstumpfförmig ausgebildet, damit eine möglichst definierte Abstützung des Schienenfußes gewährleistet ist. Darüber hinaus ist eine nahezu unbegrenzte Anzahl von Messzyklen möglich, da ein Verschleiß der Auflageteile bzw. des Sensors vermeidbar ist.

Vorteilhaft ist es auch, dass der Wegsensor als Verformungssensor **ausgebildet ist.** Dass der Sensor am Schienenfuß und am Schienenlager zumindest mittelbar anlegbar ist, gewährleistet eine direkte Bestimmung der relativen Verformung zwischen Schienenfuß und Schienenlager. Soweit der Sensor eine Betätigungskraft aufnimmt, wie zum Beispiel die Verformungskraft einer Messzelle, weist dieser eine dem zu erwartenden Messbereich entsprechende Verformbarkeit auf, so dass dieser wegen der Biegebalkenanordnung nur mit der zulässigen Auslenkungskraft belastet wird und nicht die soweit undefinierte, volle Last des Schienenfußes aufnehmen muss. In diesem Fall kann bei der Auswertung der Messwerte die zur Auslenkung des Sensors benötigte Betätigungskraft mit berücksichtigt werden.

Zudem ist es vorteilhaft, dass der Wegsensor gegen den Schienenfuß vorspannbar ist, wobei die Vorspannkraft maximal 0,5 KN beträgt. Die vom Sensor aufzunehmende Betätigungskraft beträgt etwa 300 N bis 500 N.

Eine zusätzliche Möglichkeit ist gemäß einer Weiterbildung, dass der Sensor zumindest teilweise zwischen den Auflageteilen anbringbar ist, wobei die punktförmigen Anlagen des Sensors einerseits und der beiden Auflageteile andererseits auf einer Geraden angeordnet sind, die rechtwinklig zur Schienenlängsachse verläuft. Damit sind die Auflageteile gegenüberliegend zum Kraft- und/oder Wegsensor anbringbar, so dass die generierte Biegelinie des Schienenfußes am Ort ihrer maximalen Amplitude durch den Sensor erfassbar ist. Die maximale Amplitude ist in der Regel am Ort der Krafteinleitung unmittelbar unter dem Schienensteg gegeben. Sie beträgt erfahrungsgemäß +/- 0,5 mm. Je nach Anwendungsfall, insbesondere bei einer geneigt verlaufenden Schiene, kann es Abweichungen betreffend den Ort der maximalen Amplitude geben, so dass der Sensor entsprechend außermittig zum Schienensteg zwischen den Auflageteilen angeordnet werden kann. Der Abstand a kann aber auch in Längsrichtung der Schiene verlaufen, je nachdem, welche Biegelinie ermittelt werden soll. Bei einer Schiene, deren Schienenlager als Gleisbett mit beabstandet angeordneten Aufliegelagern ausgebildet ist, sind zwecks Erfassung der Biegelinie in Richtung der Längsachse der Schiene die Auflageteile vorzugsweise im Bereich des jeweiligen Aufliegelagers in Längsrichtung versetzt vorgesehen. Im anderen Fall befinden sich die Auflageteile vorzugsweise im Bereich eines Aufliegelagers.

Ferner ist es vorteilhaft, dass mindestens ein Halteteil für die Auflageteile und/oder den Sensor vorgesehen ist, über das die Auflageteile und/oder der Sensor relativ zueinander und wahlweise relativ zum Schienenlager bzw. zum Schienenfuß positionierbar sind. Das Halteteil dient somit als Aufnahme, so dass die Messvorrichtung vormontiert als Einheit unter einem Schienenfuß positionierbar ist.

Vorteilhaft ist es auch, dass die Auflageteile und/oder der Sensor auf dem Halteteil angeordnet und/oder in das Halteteil eingelassen sind. Das Halteteil kann dabei als Platte ausgebildet sein, auf der die Auflageteile und/oder der Sensor angeordnet sind, oder aber als Block, in den die Auflageteile und/oder der Sensor eingelassen sind. Beide Formen der Aufnahme gewährleisten eine sichere und präzise Vormontage einerseits und eine präzise Positionierung unter dem Schienenfuß andererseits.

Von besonderer Bedeutung ist für die vorliegende Erfindung, dass die Auflageteile und der Sensor über das Halteteil nahezu kraftschlussfrei verbunden sind. Somit wird bei der Belastung des Schienenfußes und der damit verbundenen Belastung bzw. Verformung oder Bewegung der Auflageteile keine Kraft von den Auflageteilen auf den Sensor übertragen. Eine mögliche Krafteinleitung in das Halteteil hat damit keinen Einfluss auf das Messergebnis des Sensors.

Im Zusammenhang mit der erfindungsgemäßen Ausbildung und Anordnung ist es von Vorteil, dass die Auflageteile und/oder der Sensor formschlüssig, vorzugsweise über mindestens ein Halteteil mit dem Schienenfuß oder mit dem Schienenlager verbindbar bzw. gegen diese anlegbar oder vorspannbar sind. Somit ist die relative Position zwischen den interagierenden Elementen auch im Dauerbetrieb und den damit verbundenen Erschütterungen gewährleistet. Als Halteteil kommt dabei die im Normalbetrieb den Schienenfuß klemmende Schienenklammer in Betracht, mittels derer der Schienenfuß mittelbar über die Auflageteile gegen das Schienenlager zur Anlage kommt.

Außerdem ist es vorteilhaft, dass die Auflageteile und der Sensor gekapselt sind bzw. eine gemeinsame Umhüllung aufweisen. Dabei kann die Umhüllung aus Edelstahlblech gebildet sein, die einen entsprechenden Zugang bzw. Angriffspunkt für den Sensor aufweist. Bei dem Einsatz eines Blocks, in den die Auflageteile und der Sensor eingelassen sind, bildet der Block selbst die Hülle, die auch die Integration der Ansteuerelektrik für den Sensor gewährleistet.

Ferner ist es vorteilhaft, dass eine Auswerteelektronik zum Auswerten der durch den Sensor erfassten Messwerte und zum Ermitteln der auf die Schiene wirkenden Belastung vorgesehen ist.

Darüber hinaus ist es von Vorteil, dass zum Ermitteln der auf eine Schiene wirkenden Belastung unter Einsatz einer vorgenannten Vorrichtung zwischen den Schienenfuß und das Schienenlager ein Sensor eingebracht wird und zusätzlich zum Sensor zwei Auflageteile mit einem Abstand a zwischen den Schienenfuß und das Schienenlager eingebracht werden und der Sensor gegen den Schienenfuß und das Schienenlager zur Anlage gebracht oder gegen diese vorgespannt wird oder alternativ der als Verformungssensor ausgebildete Sensor zumindest teilweise am Schienenfuß angeordnet wird. Die Anordnung des Sensors gewährleistet ausgehend von der unbelasteten Schiene die Erfassung der Durchbiegung des Schienenfußes in positiver und in negativer Richtung, also nach oben und nach unten.

Weitere Vorteile und Einzelheiten der Erfindung sind in den Patentansprüchen und in der Beschreibung erläutert und in den Figuren dargestellt. Es zeigt:
- Figur 1: eine Prinzipskizze einer Schiene mit Schienenfuß im Querschnitt mit Sensor und Auflageteilen,
- Figur 2: eine Prinzipskizze nach Figur 1 mit verformtem Schienenfuß,
- Figur 3: eine Prinzipskizze nach Figur 1 mit Halteteil als Block.

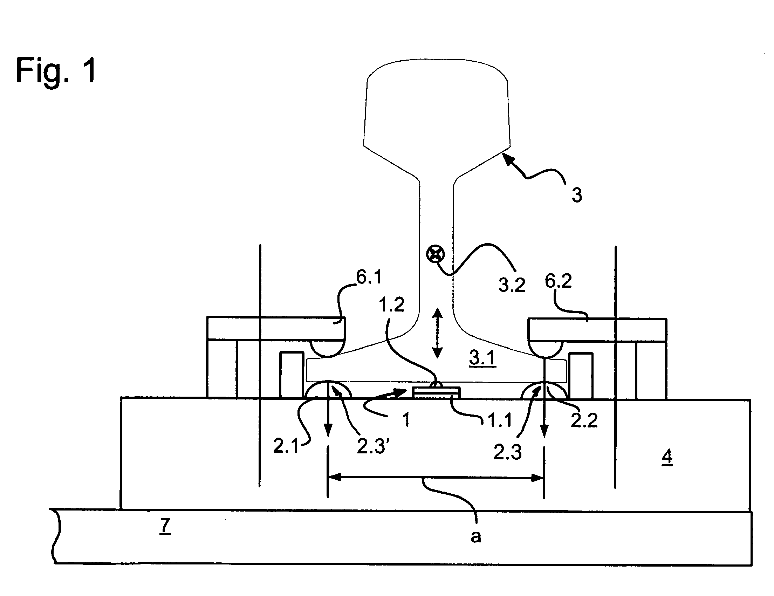

Die in Fig. 1 dargestellte Prinzipskizze zeigt den Querschnitt einer Schiene 3 mit einem Schienenfuß 3.1, der mittelbar über ein erstes und ein zweites Auflageteil 2.1, 2.2 auf einem Schienenlager 4 und einer Schwelle 7 abgestützt ist. Die Schwelle 4 liegt dabei auf einem nicht dargestellten Gleisbett.

Zwischen den beiden Auflageteilen 2.1, 2.2 ist ein Sensor 1 vorgesehen, der die durch den Pfeil angedeutete Durchbiegung des Schienenfußes 3.1 erfasst. Der Sensor 1 weist dabei einen Sensorkörper 1.1 auf, in dem ein nicht weiter dargestelltes, relativ zum Sensorkörper 1.1 bewegbares Sensormittel 1.2 vorgesehen ist. Das Sensormittel 1.2 liegt dabei gegen die Oberfläche des Schienenfußes 3.1 an bzw. ist gegen diese je nach Ausführung des Sensors 1 vorgespannt.

Das Schienenlager 4 und die Schiene 3 bzw. der Schienenfuß 3.1 sind über Halteteile, also eine rechte und linke Klammer 6.1, 6.2 miteinander form- und kraftschlüssig verbunden, wobei die Klemmkraft der jeweiligen Klammer 6.1, 6.2 mittelbar über den Schienenfuß 3.1 und die beiden Auflageteile 2.1, 2.2 auf das Schienenlager 4 übertragen wird.

Die Auflageteile 2.1, 2.2 sind halbkugelförmig ausgebildet und weisen eine punktförmige Anlage bzw. Anlagefläche 2.3, 2.3' auf. Der Sensor bzw. das Sensormittel 1.2 weist ebenso eine punktförmige Anlage bzw. Anlagefläche 1.3 auf.

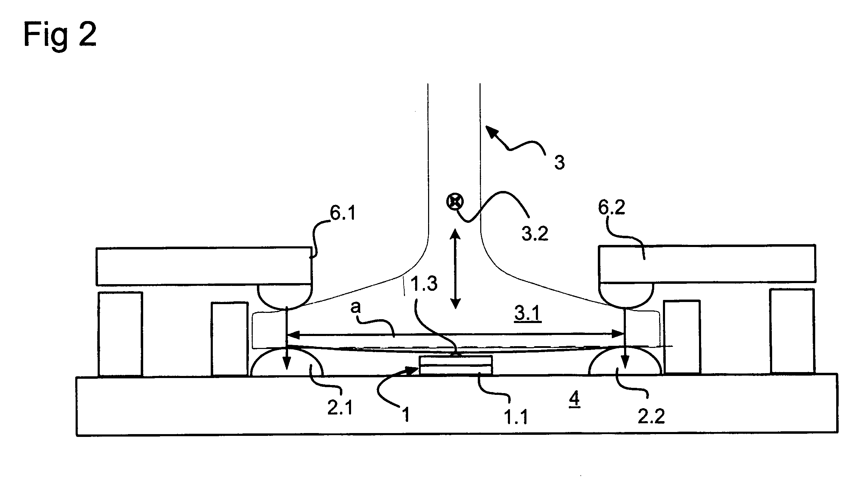

In Fig. 2 ist der Schienenfuß 3.1 ausgehend von der unbelasteten, gestrichelt dargestellten Stellung in der belasteten, durchgebogenen Stellung dargestellt. Die auf den Schienenfuß 3.1 wirkende Belastung wird dabei über die beiden Auflageteile 2.1, 2.2 in die Schwelle 4 abgeleitet. Die Durchbiegung des Schienenfußes 3.1 in der Mitte zwischen den beiden Auflageteilen 2.1, 2.2 wird dabei über das Messmittel 1.2 des Sensors 1 erfasst. Die beiden Auflageteile 2.1, 2.2 sind dabei halbkugelförmig ausgebildet, so dass sich seitens der Anlage des Schienenfußes 3.1 gegen das jeweilige Auflageteil 2.1, 2.2 ein Anlageverhältnis mit einer maximalen Bestimmtheit ergibt. Eine Aufkippung des Schienenfußes 3.1 auf dem Schienenlager 4 ist nicht möglich.

Das Messmittel 1.2 des Sensors 1 verfährt dabei relativ zum Sensorkörper 1.1 gemäß Fig. 2 nach unten, woraus die durch den Schienenfuß 3.1 erfahrene Verformung ermittelt wird.

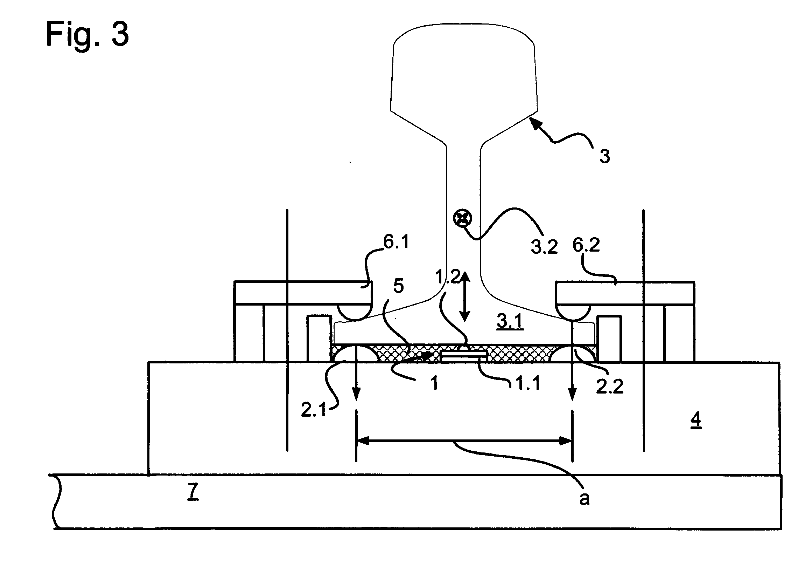

Gemäß Fig. 3 sind die beiden Auflageteile 2.1, 2.2 sowie der Sensor 1 in ein gemeinsames als Block ausgebildetes Halteteil 5 eingebettet. Das Halteteil 5 gewährleistet die relative Position zwischen dem Sensor 1 und den beiden Halteteilen 2.1, 2.2. Daneben können nicht dargestellte Verkabelungen bzw. Anschlüsse für die Auswerteelektronik innerhalb des Halteteils 5 vorgesehen werden. Das Halteteil 5 weist dabei einen rechteckförmigen Querschnitt auf, der dem durch den Schienenfuß 3.1 beim Abheben von der Schwelle 4 entstehenden Spalt entspricht. Das Halteteil 5 ist aus einem relativ weichen Material gebildet, so dass der Sensor 1 und die beiden Auflageteile 2.1, 2.2 bezüglich der auf sie einwirkenden Kräfte entkoppelt sind.

In einem nicht dargestellten Ausführungsbeispiel sind die beiden Auflageteile 2.1, 2.2 und der Sensor 1 über eine gemeinsame Platte betreffend ihre relative Position fixiert, wobei in diesem Fall zwecks Umhüllung bzw. Kapselung vorgenannter Elemente eine Edelstahlblechhülle vorgesehen ist.

### Bezugszeichenliste

- 1: Kraft- und/oder Wegsensor, Sensor
- 1.1: Sensorkörper
- 1.2: Sensormittel, Messmittel
- 1.3: Anlage, Anlagefläche
- 2.1: Auflageteil
- 2.2: Auflageteil
- 2.3: Anlage, Anlagefläche
- 2.3': Anlage, Anlagefläche
- 3: Schiene
- 3.1: Schienenfuß
- 3.2: Schienenlängsachse
- 4: Schienenlager
- 5: Halteteil
- 6.1: Halteteil, Klammer
- 6.2: Halteteil, Klammer
- 7: Schwelle

## Patentansprüche

1. Vorrichtung zum Anbringen unterhalb einer Schiene (3) zwecks Erfassung einer Schienenlast, **umfassend mindestens einen Sensor (1) und mindestens zwei Auflageteile (2.1, 2.2),** wobei die Schiene (3) einen Schienenfuß (3.1) aufweist, der über mindestens ein der Befestigung der Schiene (3) dienendes Schienenlager (4) auf einer Schwelle (7) lagerbar **und** die Vorrichtung in einen zwischen dem Schienenfuß (3.1) und dem jeweiligen Schienenlager (4) bildbaren Spalt einschiebbar ist, wobei der Schienenfuß (3.1) auf dem Schienenlager (4) über die zwei Auflageteile (2.1, 2.2) **der Vorrichtung** abstützbar ist und die Auflageteile (2.1, 2.2) in einer Richtung rechtwinklig zu einer Schienenlängsachse (3.2) mit einem Abstand a zueinander anbringbar sind,
**dadurch gekennzeichnet,**
**dass** der Sensor (1) als Wegsensor ausgebildet ist und zwecks Erfassung einer durch eine Radlast generierten Durchbiegung des Schienenfußes (3.1) derart zwischen dem Schienenlager (4) und dem Schienenfuß (3.1) anbringbar ist, dass die Abstandsänderung zwischen dem Schienenlager (4) und dem Schienenfuß (3.1) messbar ist, wobei der als Verformungssensor ausgebildete Wegsensor (1) auf dem Schienenlager (4) abstützbar und zumindest mittelbar am Schienenfuß (3.1) derart anlegbar ist, dass die Verformung des Schienenfußes (3.1) aufgrund der Radlast durch den Sensor (1) zumindest teilweise erfassbar ist und dass die Auflageteile (2.1, 2.2) eine punktförmige Anlage (1.3, 2.3) aufweisen, gegen die der Schienenfuß (3.1) aufliegt.

2. Vorrichtung nach Anspruch 1,
**dadurch gekennzeichnet,**
**dass** der Wegsensor (1) einen Messbereich von +/- 2 mm, insbesondere +/- 0,5 mm, aufweist.

3. Vorrichtung nach Anspruch 1 oder 2,
**dadurch gekennzeichnet,**
**dass der Sensor (1) eine punktförmige Anlage (1.3, 2.3) aufweist, gegen die der Schienenfuß (3.1) aufliegt.**

4. Vorrichtung nach Anspruch 1, 2 oder 3,
**dadurch gekennzeichnet,**
**dass** der Wegsensor (1) gegen den Schienenfuß (3.1) vorspannbar ist, wobei die Vorspannkraft maximal 0,5 KN beträgt.

5. Vorrichtung nach einem der vorhergehenden Ansprüche,
**dadurch gekennzeichnet,**
**dass** die vom Sensor (1) aufzunehmende Betätigungskraft zwischen 300 N und 500 N beträgt.

6. Vorrichtung nach einem der vorhergehenden Ansprüche,
**dadurch gekennzeichnet,**
**dass** der Sensor (1) zumindest teilweise zwischen den Auflageteilen (2.1, 2.2) anbringbar ist, wobei die punktförmigen Anlagen (1.3, 2.3) des Sensors (1) einerseits und der beiden Auflageteile (2.1, 2.2) andererseits auf einer Geraden angeordnet sind, die rechtwinklig zur Schienenlängsachse (3.2) verläuft.

7. Vorrichtung nach einem der vorhergehenden Ansprüche,
**dadurch gekennzeichnet,**
**dass** mindestens ein Halteteil (5) für die Auflageteile (2.1, 2.2) und den Sensor (1) vorgesehen ist, über das die Auflageteile (2.1, 2.2) und der Sensor (1) relativ zueinander positionierbar sind.

8. Vorrichtung nach einem der vorhergehenden Ansprüche,
**dadurch gekennzeichnet,**
**dass** die Auflageteile (2.1, 2.2) und/oder der Sensor (1) über das Halteteil (5) relativ zum Schienenlager (4) und/oder zum Schienenfuß (3.1) positionierbar sind.

9. Vorrichtung nach einem der vorhergehenden Ansprüche,
**dadurch gekennzeichnet,**
**dass** die Auflageteile (2.1, 2.2) und/oder der Sensor (1) auf dem Halteteil (5) angeordnet und/oder in das Halteteil (5) eingelassen sind.

10. Vorrichtung nach einem der Ansprüche 7 bis 9,
**dadurch gekennzeichnet,**
**dass** die durch das Halteteil (5) gebildete Verbindung zwischen den Auflageteilen (2.1, 2.2) und dem Sensor (1) nahezu kraftschlussfrei ausgebildet ist.

11. Vorrichtung nach einem der vorhergehenden Ansprüche,
**dadurch gekennzeichnet,**
**dass** die Auflageteile (2.1, 2.2) und/oder der Sensor (1) und/oder das Halteteil (5) formschlüssig mit dem Schienenfuß (3.1) oder mit dem Schienenlager (4) verbindbar sind.

12. Vorrichtung nach einem der vorhergehenden Ansprüche,
**dadurch gekennzeichnet,**
**dass** die Auflageteile (2.1, 2.2) mittel- oder unmittelbar über mindestens ein Halteteil (6.1, 6.2) gegen den Schienenfuß (3.1) und/oder das Schienenlager (4) anlegbar oder vorspannbar sind.

13. Vorrichtung nach einem der vorhergehenden Ansprüche,
**dadurch gekennzeichnet,**
**dass** die Auflageteile (2.1, 2.2) und der Sensor (1) gekapselt sind oder eine gemeinsame Umhüllung aufweisen.

14. Vorrichtung nach einem der vorhergehenden Ansprüche,
**dadurch gekennzeichnet,**
**dass** eine Auswerteelektronik zum Auswerten der durch den Sensor (1) erfassten Messwerte und zum Ermitteln der auf die Schiene wirkenden Belastung vorgesehen ist.

15. Verfahren zum Ermitteln der auf eine Schiene wirkenden Belastung unter Einsatz einer Vorrichtung gemäß einem der vorhergehenden Ansprüche, bei dem **in einen bildbaren Spalt** zwischen dem Schienenfuß (3.1) und **dem** Schienenlager (4) ein Sensor (1) eingebracht wird,
**dadurch gekennzeichnet,**
**dass**
a) neben dem Sensor (1) zwei Auflageteile (2.1, 2.2) mit einem Abstand a zwischen den Schienenfuß (3.1) und das jeweilige Schienenlager (4) eingebracht werden,
b) der Sensor (1) gegen den Schienenfuß (3.1) und das Schienenlager (4) zur Anlage gebracht oder gegen diese vorgespannt wird oder
c) der als Weg- oder Verformungssensor ausgebildete Sensor (1) zumindest teilweise am Schienenfuß (3.1) angeordnet wird,
d) der Schienenfuß (3.1) gegen punktförmige Anlagen (1.3, 2.3) der zwei Auflageteile (2.1, 2.2) zur Anlage gebracht wird.

## Claims

1. A device for attachment below a rail (3) for the purpose of recording a rail load, comprising at least one sensor (1) and at least two support parts (2.1, 2.2), wherein the rail (3) comprises a rail foot (3.1), which can be supported on a sleeper (7) via at least one rail bearing (4) which serves to affix the rail (3) and the device can be inserted into a gap which can be formed between the rail foot (3.1) and the respective rail bearing (4), wherein the rail foot (3.1) can be supported on a rail bearing (4) via the two support parts (2.1, 2.2) of the device, and the support parts (2.1, 2.2) can be attached in a direction at right-angles to a longitudinal rail axis (3.2) at a distance a from each other,
**characterized in that**
the sensor (1) is designed as a proximity sensor and can, for the purpose of recording a bending of the rail foot (3.1) generated by a wheel load, be attached between the rail bearing (4) and the rail foot (3.1) in such a manner that the change in distance between the rail bearing (4) and the rail foot (3.1) can be measured, wherein the proximity sensor (1) which is designed as a deformation sensor can be supported on the rail bearing (4), and can be placed at least indirectly on the rail foot (3.1) in such a manner that the deformation of the rail foot (3.1) due to the wheel load can at least partially be recorded by the sensor (1), and that the support parts (2.1, 2.2) comprise a punctiform arrangement (1.3, 2.3), against which the rail foot (3.1) rests.

2. A device according to claim 1,
**characterized in that**
the proximity sensor (1) comprises a measuring range of +/- 2mm, in particular +/- 0.5 mm.

3. A device according to either of claims 1 or 2,
**characterized in that**
the sensor (1) comprises a punctiform arrangement (1.3, 2.3) against which the rail foot (3.1) rests.

4. A device according to any one of claims 1, 2 or 3,
**characterized in that**
the proximity sensor (1) can be pre-tensioned against the rail foot (3.1), wherein the pre-tensioning force totals a maximum of 0.5 KN.

5. A device according to any one of the preceding claims,
**characterized in that**
the actuation force to be recorded by the sensor (1) totals between 300 N and 500 N.

6. A device according to any one of the preceding claims,
**characterized in that**
the sensor (1) can be attached at least partially between the support parts (2.1, 2.2), wherein the punctiform arrangements (1.3, 2.3) of the sensor (1) on the one hand, and the two support parts (2.1, 2.2) on the other hand are arranged on a straight line which runs at right-angles to the longitudinal rail axis (3.2).

7. A device according to any one of the preceding claims,
**characterized in that**
at least one retaining part (5) is provided for the support parts (2.1, 2.2) and the sensor (1), via which the support parts (2.1, 2.2) and the sensor (1) can be positioned relative to each other.

8. A device according to any one of the preceding claims,
**characterized in that**
the support parts (2.1, 2.2) and/or the sensor (1) can be positioned via the retaining part (5) relative to the rail bearing (4) and/or to the rail foot (3.1).

9. A device according to any one of the preceding claims,
**characterized in that**
the support parts (2.1, 2.2) and/or the sensor (1) are arranged on the retaining part (5) and/or are embedded in the retaining part (5).

10. A device according to any one of claims 7 to 9,
**characterized in that**
the connection formed by the retaining part (5) between the support parts (2.1, 2.2) and the sensor (1) is almost traction-free.

11. A device according to any one of the preceding claims,
**characterized in that**
the support parts (2.1, 2.2) and/or the sensor (1) and/or the retaining part (5) can be connected in a form-fit manner with the rail foot (3.1) or with the rail bearing (4).

12. A device according to any one of the preceding claims,
**characterized in that**
the support parts (2.1, 2.2) can be placed or pre-tensioned indirectly or directly via at least one retaining part (6.1, 6.2) against the rail foot (3.1) and/or the rail bearing (4).

13. A device according to any one of the preceding claims,
**characterized in that**
the support parts (2.1, 2.2) and the sensor (1) are encapsulated or comprise a shared encasement.

14. A device according to any one of the preceding claims,
**characterized in that**
an evaluation electronic system is provided for evaluating the measured values recorded by the sensor (1) and for determining the load acting on the rail.

15. A method for determining the load acting on a rail using a device according to any one of the preceding claims, in which a sensor (1) is inserted into a gap which can be formed between the rail foot (3.1) and the rail bearing (4),
**characterized in that**
a) in addition to the sensor (1), two support parts (2.1, 2.2) are provided with a distance a between the rail foot (3.1) and the respective rail bearing (4),
b) the sensor (1) is brought into contact or is pre-tensioned against the rail foot (3.1) and the rail bearing (4), or
c) the sensor (1), which is designed as a proximity or deformation sensor, is arranged at least partially on the rail foot (3.1),
d) the rail foot (3.1) is brought into contact against punctiform arrangements (1.3, 2.3) of the two support parts (2.1, 2.2).

## Revendications

1. Dispositif pour la pose sous un rail (3) aux fins de mesurer une charge de rail, comprenant au moins un capteur (1) et au moins deux éléments d'appui (2.1, 2.2), le rail (3) présentant un patin de rail (3.1), lequel peut être posé sur une traverse (7) par le biais d'au moins un appui de rail (4) servant à la fixation du rail (3) et le dispositif étant insérable dans une fente pouvant être formée entre le patin de rail (3.1) et l'appui de rail (4) respectif, le patin de rail (3.1) pouvant être arc-bouté sur l'appui de rail (4) par les deux éléments d'appui (2.1, 2.2) du dispositif et les éléments d'appui (2.1, 2.2) pouvant être amenés dans un sens perpendiculaire à un axe longitudinal de rail (3.2) avec un écartement a entre eux,
**caractérisé en ce que**
le capteur (1) est formé comme capteur de position et, aux fins de la détection d'un fléchissement du patin de rail (3.1) généré par une charge de roue, peut être posé de telle sorte entre l'appui de rail (4) et le patin de rail (3.1) que la modification d'écartement entre l'appui de rail (4) et le patin de rail (3.1) est mesurable, le capteur de position (1) formé comme capteur de déformation pouvant être arc-bouté sur l'appui de rail (4) et pouvant être posé au moins indirectement sur le patin de rail (3.1) de telle sorte que la déformation du patin de rail (3.1) en raison de la charge de roue soit détectable au moins partiellement par le capteur (1), et que les éléments d'appui (2.1, 2.2) présentent une zone d'appui (1.3, 2.3) ponctuelle contre laquelle le patin de rail (3.1) repose.

2. Dispositif selon la revendication 1,
**caractérisé en ce que**
le capteur de position (1) présente une plage de mesure de +/- 2 mm, en particulier de +/- 0,5 mm.

3. Dispositif selon la revendication 1 ou 2,
**caractérisé en ce que**
le capteur (1) présente une zone d'appui (1.3, 2.3) ponctuelle contre laquelle le patin de rail (3.1) repose.

4. Dispositif selon la revendication 1, 2 ou 3,
**caractérisé en ce que**
le capteur de position (1) peut être mis en précontrainte contre le patin de rail (3.1), la force de précontrainte s'élevant à 0,5 kN au maximum.

5. Dispositif selon l'une des revendications précédentes,
**caractérisé en ce que**
la force de commande devant être enregistrée par le capteur (1) se trouve entre 300 N et 500 N.

6. Dispositif selon l'une des revendications précédentes,
**caractérisé en ce que**
le capteur (1) peut être amené au moins partiellement entre les éléments d'appui (2.1, 2.2), les zones d'appui (1.3, 2.3) ponctuelles du capteur (1) d'une part et des deux éléments d'appui (2.1, 2.2) d'autre part étant disposées sur une droite, laquelle est perpendiculaire à l'axe longitudinal de rail (3.2).

7. Dispositif selon l'une des revendications précédentes,
**caractérisé en ce qu'**
au moins un élément de maintien (5) est prévu pour les éléments d'appui (2.1, 2.2) et le capteur (1), par lequel les éléments d'appui (2.1, 2.2) et le capteur (1) peuvent être positionnés relativement les uns aux autres.

8. Dispositif selon l'une des revendications précédentes,
**caractérisé en ce que**
les éléments d'appui (2.1, 2.2) et/ou le capteur (1) peuvent être positionnés relativement à l'appui de rail (4) et/ou au patin de rail (3.1) par l'élément de maintien (5).

9. Dispositif selon l'une des revendications précédentes,
**caractérisé en ce que**
les éléments d'appui (2.1, 2.2) et/ou le capteur (1) sont disposés sur l'élément de maintien (5) et/ou encastrés dans l'élément de maintien (5).

10. Dispositif selon l'une des revendications 7 à 9,
**caractérisé en ce que**
la liaison formée par l'élément de maintien (5) entre les éléments d'appui (2.1, 2.2) et le capteur (1) est formée quasiment sans adhérence.

11. Dispositif selon l'une des revendications précédentes,
**caractérisé en ce que**
les éléments d'appui (2.1, 2.2) et/ou le capteur (1) et/ou l'élément de maintien (5) peuvent être joints par liaison de forme avec l'appui de rail (3.1) ou avec le patin de rail (4).

12. Dispositif selon l'une des revendications précédentes,
**caractérisé en ce que**
les éléments d'appui (2.1, 2.2) peuvent être disposés ou mis en précontrainte contre le patin de rail (4) et/ou contre l'appui de rail (3.1) indirectement ou directement, par au moins un élément de maintien (6.1, 6.2).

13. Dispositif selon l'une des revendications précédentes,
**caractérisé en ce que**
les éléments d'appui (2.1, 2.2) et le capteur (1) sont blindés ou présentent une gaine commune.

14. Dispositif selon l'une des revendications précédentes,
**caractérisé en ce que**
une électronique d'évaluation pour l'évaluation des valeurs de mesure enregistrées par le capteur (1) et pour la détermination de la sollicitation subie par le rail est prévue.

15. Procédé pour la détermination de la sollicitation subie par le rail en employant un dispositif conforme à l'une des revendications précédentes, sur lequel un capteur (1) est placé dans une fente pouvant être formée entre le patin de rail (3.1) et l'appui de rail (4),
**caractérisé en ce que**
a) outre le capteur (1), deux éléments d'appui (2.1, 2.2) sont disposés avec un écartement a entre le patin de rail (3.1) et l'appui de rail (4) respectif, b) le capteur (1) est appliqué contre le patin de rail (3.1) et contre l'appui de rail (4) ou est mis en précontrainte contre ceux-ci ou c) le capteur (1) formé comme capteur de position ou de déformation est disposé au moins partiellement sur le patin de rail (3.1),
d) le patin de rail (3.1) est appliqué contre des zones d'appui (1.3, 2.3) ponctuelles des deux éléments d'appui (2.1, 2.2).
